# EUROPÄISCHE PATENTSCHRIFT

(11) **EP 3 924 406 B1**
(45) Veröffentlichungstag und Bekanntmachung des Hinweises auf die Patenterteilung: **05.04.2023**
(21) Anmeldenummer: 20703684.9
(22) Anmeldetag: 04.02.2020
(51) Int. Cl.: C08J 5/18, B29B 17/00

(54) **FOLIE AUS RECYCELTEM KUNSTSTOFFMATERIAL FÜR TRAGBARE DATENTRÄGER, VERFAHREN ZUR HERSTELLUNG DER RECYCLINGFOLIE UND DIE RECYCLINGFOLIE ENTHALTENDER DATENTRÄGER**
FILM MADE OF RECYCLED PLASTIC MATERIAL FOR WEARABLE DATA STORAGE MEDIA, A PROCESS FOR PRODUCING THE RECYCLED FILM AND DATA STORAGE MEDIA CONTAINING THE RECYCLED FILM
FILM CONSTITUÉ D'UN MATÉRIAU PLASTIQUE RECYCLÉ DESTINÉ À DES SUPPORTS DE DONNÉES PORTATIFS, PROCÉDÉ DE PRODUCTION DU FILM RECYCLÉ ET SUPPORT DE DONNÉES CONTENANT LE FILM RECYCLÉ

(30) Priorität: 11.02.2019 DE 102019000975
(43) Veröffentlichungstag der Anmeldung: 22.12.2021
(73) Patentinhaber: Giesecke + Devrient Mobile Security GmbH, 81677 München (DE)
(72) Erfinder: RIEDL, Josef, 85395 Attenkirchen (DE)
(74) Vertreter: Giesecke + Devrient IP
(86) Internationale Anmeldenummer: PCT/EP2020/025048
(87) Internationale Veröffentlichungsnummer: WO 2020/164803

(56) Entgegenhaltungen:
- DE-A1-102010 009 230
- US-A1- 2007 243 362
- US-A1- 2011 084 148

## Beschreibung

Die Erfindung betrifft eine Folie aus recyceltem Kunststoffmaterial, die zur Herstellung von Datenträgern geeignet ist, ein Verfahren zur Herstellung der Folie, einen Kartenkörper für einen tragbaren Datenträger, der die Folie enthält, ein recyceltes Kunststoffmaterial, das zur Herstellung der Folie geeignet ist, sowie ein Verfahren zur Herstellung dieses Kunststoffmaterials.

Weltweit fallen jährlich viele Millionen Tonnen Kunststoffabfälle an. Nur ein kleiner Teil davon, meist Produktionsabfälle aus der Industrie, ist sauber und sortenrein und kann relativ problemlos wiederaufbereitet und erneut dem Produktionsprozess zugeführt werden. Der größte Teil der Kunststoffabfälle ist ein Gemisch aus unterschiedlichen Kunststoffmaterialien, zudem oft stark verschmutzt und mit Nicht-Kunststoffmaterialien versetzt. Einen großen Anteil daran haben Verpackungsmaterialien wie Folien, Plastiktüten und Flaschen. Aber auch in Haushaltsgeräten, Kinderspielzeugen, in Bauwerken und Fahrzeugen wird mehr und mehr Kunststoff verwendet, aus dem irgendwann Kunststoffabfall wird. Dieses Materialgemisch ist nur schwierig wiederzuverwerten, weshalb in den vergangenen Jahrzehnten, und z. T. auch heute noch, ein großer Teil der Kunststoffabfälle auf Mülldeponien landet oder in der Natur "entsorgt" wird. Die Kunststoffabfälle sammeln sich an, denn Kunststoff verrottet nicht, jedenfalls nicht in überschaubaren Zeiträumen.

Es versteht sich, dass es wünschenswert ist, eine weitere Ansammlung von Kunststoffabfällen zu vermeiden und nach Möglichkeit auch die bereits vorhandenen Kunststoff-Müllberge abzubauen und das Kunststoffmaterial einer Wiederverwertung (Recycling) zuzuführen.

Die sinnvollste Wiederverwertung ist die sogenannte "werkstoffliche Verwertung", bei der aus Kunststoffabfall ein neues Kunststoffprodukt hergestellt wird. Wichtig für ein gelungenes werkstoffliches Recycling ist eine gute Reinigung, Sortierung und Aufbereitung des Kunststoffabfalls. Verfahren hierfür sind bekannt. Meist werden zunächst großformatige Teile und Metallteile aussortiert und dann die verschiedenen Kunststoffe soweit wie möglich sortenrein getrennt. Dabei macht man sich die unterschiedlichen spezifischen Gewichte der verschiedenen Kunststoffsorten zunutze. In neueren Verfahren wird zum Erkennen der Kunststoffsorten auch IR-Spektroskopie eingesetzt.

Werkstofflich wiederverwendet werden im Wesentlichen nur thermoplastische Kunststoffe. Diese können eingeschmolzen und zu neuen Produkten geformt werden. In der Praxis handelt es sich dabei vor allem um Polyolefine (hauptsächlich Polyethylen (PE) und Polypropylen (PP), beispielsweise aus Folienmaterialien), um Polyester (Polyethylenterephthalat (PET), vorwiegend von Flaschen), aber auch um Polyvinylchlorid (PVC), Polystyrol (PS) und Polyurethan (PU/PUR). Aus dem Meer stammende Kunststoffabfälle enthalten auch einen nennenswerten Anteil an Polyamiden (PA), der vorwiegend von Fischernetzen stammt.

Die möglichst sortenrein aussortierten Thermoplaste werden aufbereitet, d. h. zerkleinert (Mahlgut, Agglomerat) und ggf. entweder ohne Zusätze umgeschmolzen und granuliert, wobei ein Regranulat erhalten wird, oder zwecks Verbesserung der chemischen, thermischen, mechanischen oder sonstiger Eigenschaften oder zur Einstellung der Materialeigenschaften entsprechend den Erfordernissen ihrer späteren Verwendung beim Umschmelzen mit Additiven versetzt (Compoundierung) und granuliert. Dabei wird ein Regenerat erhalten. Übliche Zusatzstoffe sind beispielsweise Stabilisatoren wie Antioxidantien, Lichtschutzmittel und Flammschutzmittel, Farbmittel wie Farbstoffe und Pigmente, Weichmacher, Extender, Füllstoffe und Verstärkungsstoffe.

Leider haben aus Altkunststoffen gewonnene Kunststoffmaterialien nicht dieselbe Qualität wie die entsprechenden ursprünglichen Kunststoffmaterialien. Das liegt zum einen daran, dass eine hundertprozentige sortenreine Trennung von Kunststoffabfällen in der Praxis nicht machbar ist. Zum anderen waren die Kunststoffabfälle oft über einen längeren Zeitraum schädigenden Umweltbedingungen ausgesetzt, was die Qualität des Materials zusätzlich verschlechtert. Dies trifft insbesondere auf Abfälle zu, die Deponien entnommen wurden. Dieses Material ist von besonders schlechter Qualität, da es Hitze, Kälte und UV-Strahlung ausgesetzt war.

Die Verschlechterung der recycelten Kunststoffe hinsichtlich ihrer mechanischen und chemischen Eigenschaften, und oft auch hinsichtlich ihrer thermischen Eigenschaften und optischen Eigenschaften gegenüber den entsprechenden "neuen" Kunststoffen kann auch durch die Compoundierung mit geeigneten Additiven nicht völlig ausgeglichen werden. Tatsächlich enthalten deshalb aus Recyclingmaterial hergestellte Kunststoffprodukte meist nicht zu 100 % recycelten Kunststoff, sondern nur einen gewissen Anteil an recyceltem Kunststoff, wobei der Anteil oft niedrig ist. Verallgemeinernd kann man sagen, dass der tolerierbare Anteil an Recyclingmaterial umso geringer ist, je höherwertiger das Kunststoffprodukt ist bzw. je speziellere Anforderungen an die Eigenschaften eines Kunststoffprodukts gestellt werden.

Verpackungsmaterialien wie Verpackungsfolien beispielsweise tolerieren einen hohen Anteil an Recyclingmaterial, während Datenträger wie beispielsweise SIM-Karten, Kreditkarten, Gesundheitskarten, ID-Karten und Pass-Datenseiten bisher nicht unter Mitverwendung von recyceltem Kunststoff hergestellt werden konnten.

Tragbare Datenträger, beispielsweise elektronische Datenträger, weisen Kartenkörper auf, die aus einer oder mehreren Kunststofffolien bestehen. Meist handelt es sich um Mehrschichtfolien, wie um coextrudierte Verbundfolien. Übliche Folienmaterialien sind thermoplastische Polymere wie Polyethylenterephthalat, Polycarbonat, Polyethylen, Polypropylen, Polyamide oder thermoplastische Polyurethane. Aber auch Monofolien finden Verwendung. Diese bestehen meist aus PVC.

An die Folienmaterialien für Kartenkörper werden hohe Anforderungen gestellt. Erwünscht ist, dass sie
- eine hohe Flexibilität besitzen, um eine hohe Biegebeanspruchbarkeit des Datenträgers zu gewährleisten,
- die Fähigkeit besitzen, Spannungen, Risse oder Brüche in den Kartenkörpern zu vermeiden, insbesondere wenn der Kartenkörper zur Herstellung eines elektronischen Datenträgers mit elektronischen Bauteilen kombiniert wird,
- eine gute Temperaturstabilität und Dimensionsstabilität bei Herstellung und Verarbeitung besitzen,
- eine gute Handhabbarkeit bei der Weiterverarbeitung besitzen, insbesondere nicht zum Verblocken neigen,
- bedruckbar sind, ggf. siegelbar sind, und ggf. auch mit anderen gängigen Kartenmaterialien laminierbar sind, und
- einfach und preiswert herstellbar sind.

Vor allem sollte der Kartenkörper den Einbau elektronischer Bauteile problemlos tolerieren und eine gute Beständigkeit gegenüber Spannungsrissen und Brüchen, beispielsweise bei Biegebeanspruchung und schlagartiger Krafteinwirkung, aufweisen.

Kunststoffe, die aus gemischten Kunststoffabfällen zurückgewonnen wurden, konnten diese Anforderungen bisher nicht erfüllen.

Es ist erstrebenswert, einen Weg zu finden, Kunststofffolien, die zur Herstellung von tragbaren Datenträgern wie beispielsweise Chipkarten geeignete Eigenschaften haben, aus gemischten Kunststoffabfällen beliebiger, undefinierter Herkunft zu erzeugen.

Eine Aufgabe der vorliegenden Erfindung ist es daher, ein Kunststoffmaterial bereitzustellen, das recycelten Kunststoff enthält und zur Herstellung von Folien für Kartenkörper tragbarer Datenträger geeignet ist, sowie ein Verfahren zur Herstellung des Kunststoffmaterials aus gemischten Kunststoffabfällen undefinierter Herkunft bereitzustellen.

Eine Aufgabe der vorliegenden Erfindung ist es auch, eine Folie bereitzustellen, die aus gemischten Kunststoffabfällen undefinierter Herkunft recyceltes Kunststoffmaterial enthält und zur Herstellung von Datenträger-Kartenkörpern geeignet ist, sowie ein Verfahren zur Herstellung der Folie bereitzustellen.

Eine Aufgabe der vorliegenden Erfindung ist es ferner, einen Datenträger bzw. einen Kartenkörper für einen Datenträger bereitzustellen, der eine Folie aufweist, die aus gemischten Kunststoffabfällen undefinierter Herkunft recyceltes Kunststoffmaterial enthält.

Datenträger im Sinne dieser Erfindung sind tragbare Gegenstände, die einen Kartenkörper besitzen, der mindestens eine Kunststofffolie aufweist. Durch Ausstatten mit Daten oder Elementen, die Daten enthalten, beispielsweise mit Aufdrucken oder elektronischen Modulen, wird aus dem Kartenkörper ein (elektronischer) Datenträger hergestellt. Beispielhafte Datenträger sind SIM-Karten, Kreditkarten, Gesundheitskarten oder Ausweiskarten wie beispielsweise Personalausweise.

Die Aufgaben werden gelöst durch das Verfahren zur Herstellung eines Kunststoffmaterials mit den Merkmalen, wie sie im unabhängigen Anspruch 1 angegeben sind, durch das Kunststoffmaterial mit den Merkmalen, wie sie im unabhängigen Anspruch 2 angegeben sind, durch die Folie mit den Merkmalen, wie sie im unabhängigen Anspruch 5 angegeben sind, durch das Verfahren zur Herstellung der Folie mit den Merkmalen, wie sie im unabhängigen Anspruch 10 angegeben sind, und durch den Datenträger mit den Merkmalen, wie sie im unabhängigen Anspruch 13 angegeben sind. Ausführungsformen der Erfindung sind in den jeweiligen abhängigen Ansprüchen angegeben.

Die vorliegende Erfindung basiert auf der Erkenntnis, dass Polyolefine, Polyester und Polyamide, die aus gemischten Kunststoffabfällen recycelt worden sind, durch Zugabe bestimmter thermoplastischer Elastomere so modifiziert werden können, dass sie zur Herstellung von Folien für Datenträger-Kartenkörper geeignet sind. Dies ist selbst dann möglich, wenn die Polyolefine, Polyester oder Polyamide aus Kunststoffabfall gewonnen wurden. Als Ausgangsmaterialien für die modifizierten Polyolefine, Polyester und Polyamide dienen die entsprechenden thermoplastischen Kunststoffe, die aus gemischten Kunststoffabfällen in bekannter Weise möglichst sortenrein zurückgewonnen wurden.

Der Begriff "sortenrein", wie er hierin verwendet wird, bedeutet, dass die recycelten Kunststoffe zwar in ihren Grundpolymeren übereinstimmen, aber unterschiedliche Additive (wie Flammhemmer, Antioxidantien, etc.) enthalten können. Für diese Kunststoffe ist auf dem technischen Gebiet des Kunststoff-Recyclings auch der Begriff "sortenähnlich" üblich.

Ferner werden für die Zwecke der vorliegenden Offenbarung ein bestimmtes Polyolefin (beispielsweise Polyethylen), ein bestimmter Polyester (beispielsweise Polyethylenterephthalat) und ein bestimmtes Polyamid auch dann als "sortenrein" betrachtet, wenn es bzw. er einen bestimmten Anteil an anderen Kunststoffen enthält, mit denen es bzw. er in der Schmelze homogen mischbar ist. Der Anteil derartiger Kunststoffe sollte bevorzugt höchstens 10 Gew.-%, besonders bevorzugt höchstens 5 Gew.-% betragen. Auch ein geringer Anteil an Verunreinigungen, d. h. an Kunststoffen, die in der Schmelze nicht homogen mit dem thermoplastischen Polyolefin, Polyester oder Polyamid mischbar sind, ist tolerabel. Er sollte aber nicht mehr als 1 Gew.-%, bevorzugt nicht mehr als 0,5 Gew.-%, und idealerweise 0 Gew.-% betragen.

Die Ausgangsmaterialien werden bevorzugt in Form von Regenerat eingesetzt, d. h. sie sind bereits mit Additiven (Kettenverlängerer, Impact-Modifier etc.) compoundiert, wie sie üblicherweise verwendet werden, um das Recyclingmaterial an seine spätere Verwendung als Folienmaterial anzupassen. Die Ausgangsmaterialien können aber auch in Form von Mahlgut, Agglomeraten oder Regranulaten eingesetzt werden.

Im Folgenden wird das Ausgangsmaterial, unabhängig davon, ob es sich um Mahlgut, Agglomerate, Regranulat oder Regenerat handelt, mit dem Begriff "Recyclat" bezeichnet.

Um ein Kunststoffmaterial zu erhalten, das zur Herstellung von Folien für Kartenkörper tragbarer Datenträger geeignet ist, wird das Recyclat erfindungsgemäß mit thermoplastischen Elastomeren modifiziert.

Die thermoplastischen Elastomere sind Blockcopolymere mit harten und weichen Segmenten. Die Hartsegmente wirken als physikalische Vernetzungspunkte und verleihen dem thermoplastischen Elastomer Festigkeit, während die Weichsegmente dem thermoplastischen Elastomer Flexibilität verleihen. Durch Variieren des Anteils an Hartsegmenten und Weichsegmenten lassen sich die Eigenschaften des thermoplastischen Elastomers in weiten Grenzen variieren.

Die Art des zur Modifizierung verwendeten thermoplastischen Elastomers muss auf die Art des zu modifizierenden Recyclats abgestimmt werden:
Zur Modifizierung von Polyolefin-Recyclaten (beispielsweise Polyethylen-Recyclaten) werden thermoplastische Olefinelastomere oder thermoplastische Kautschukvulkanisate eingesetzt. Thermoplastische Kautschukvulkanisate bzw. thermoplastische Polyolefinvulkanisate sind ein Gemisch aus einem Polyolefin-basierten Kunststoff, vor allem Polypropylen (Hartsegment), und einem Monomer wie Ethylen-Propylen-Dien-Monomer (Weichsegment).

Zur Modifizierung von Polyester-Recyclaten (beispielsweise PET-Recyclaten) werden bevorzugt thermoplastische Copolyesterelastomere eingesetzt, beispielsweise mit einem Butylenterephthalat-Block (Hartsegment) und einem Butylenglykolether-Block (Weichsegment). Geeignet sind aber auch thermoplastische Urethanelastomere, beispielsweise Elastomere mit einem Polyurethan-Block (Hartsegment) und einem Polyester-Block (Weichsegment).

Zur Modifizierung von Polyamid-Recyclaten werden bevorzugt thermoplastische Polyamidelastomere eingesetzt, beispielsweise Elastomere mit einem Polyamid-Block (Hartsegment) und einem Polyether-Block (Weichsegment). Geeignet sind aber auch thermoplastische Copolyesterelastomere und thermoplastische Urethanelastomere, wie sie oben für Polyester-Recyclate beschrieben wurden.

Bei der Wahl geeigneter thermoplastischer Elastomere muss berücksichtigt werden, dass sie eine Schmelzviskosität haben sollten, die der Schmelzviskosität des zu modifizierenden Recyclats möglichst ähnlich ist. Gleichzeitig sollte das thermoplastische Elastomer eine möglichst geringe Shore-Härte und einen möglichst guten Bruchdehnungswert besitzen. Die Shore Härte sollte bei PEBA (Polyetherblockamid) in einem Bereich von 20-50, bevorzugt in einem Bereich von 30-45 Shore Härte D liegen. Die Shore Härte sollte bei TPU in einem Bereich von 15-70, bevorzugt in einem Bereich von 30-65 Shore Härte D liegen. Die Shore Härte sollte bei TPC (thermoplastische Copolyesterelastomere) in einem Bereich von 32-73, bevorzugt in einem Bereich von 45-71 Shore Härte D liegen. Die Shore Härte sollte bei TPO/TPV (thermoplastische Olefinelastomere/thermoplastische Kautschukvulkanisate) in einem Bereich von 10-41, bevorzugt in einem Bereich von 22-35 Shore Härte D liegen. Geeignete Bereiche für die Bruchdehnung sind 200%-700%, bevorzugt 350% bis 700%. Bei vergleichbarer Übereinstimmung hinsichtlich der Schmelzviskositäten ist das thermoplastische Elastomer mit der geringsten Shore-Härte und/oder dem besten Bruchdehnungswert zu wählen.

Die zur Modifizierung verwendeten Mengen an thermoplastischen Elastomeren hängen zum einen vom Recyclatmaterial und zum anderen davon ab, für welche Schicht einer Datenträger-Recyclingfolie (einer Folie, die zur Herstellung eines Datenträgers geeignet ist) das Datenträger-Recyclat (das mit thermoplastischem Elastomer modifizierte Recyclat) bestimmt ist. Folien zur Herstellung von Datenträgern können einschichtig oder mehrschichtig sein. Mehrschichtige Verbundfolien sind in der Regel bevorzugt.

Bei mehrschichtigen Folien werden bevorzugt für weiter innen liegende Schichten Datenträger-Recyclate mit einem höheren Anteil an Recyclat verwendet als für weiter außen liegende Schichten, d. h. der Anteil an thermoplastischem Elastomer ist umso höher, je weiter außen sich die jeweilige Schicht im Folienverbund befindet. Es können auch Außenschichten aus reinem thermoplastischen Elastomer oder aus einem siegelfähigen Thermoplasten ohne Recyclatanteil verwendet werden.

Es ist jedoch auch möglich, dass bei mehrschichtigen Folien die weiter außen liegenden Schichten mehr Recyclat enthalten als die inneren Schichten.

Bevorzugte Gewichtsverhältnisse von Recyclatmaterial und modifizierendem thermoplatischen Elastomer sind für Polyester-Recyclate 2,5 - 15 Gew.-%, und unter Umständen bis zu 20 Gew.-% thermoplastisches Elastomer, besonders bevorzugt 5 - 7 Gew.-% thermoplastisches Elastomer im Datenträger-Recyclat; für Polyolefin-Recyclate 2,5 - 20 Gew.-% thermoplastisches Elastomer, besonders bevorzugt 5 -10 Gew.-% thermoplastisches Elastomer im Datenträger-Recyclat; und für Polyamid-Recyclate 2,5 - 20 Gew.-% thermoplastisches Elastomer, besonders bevorzugt 5 -10 Gew.-% thermoplastisches Elastomer im Datenträger-Recyclat.

Die Verarbeitung des Datenträger-Recyclats (des mit thermoplastischem Elastomer modifizierten Recyclats) zu einer Datenträger-Recyclingfolie (einer Folie aus dem Datenträger-Recyclat, die zur Herstellung eines Datenträgers bzw. eines Datenträger-Kartenkörpers geeignet ist) kann in an sich bekannter Weise im Blasverfahren erfolgen, wobei eine Schlauchfolie entsteht. Alternativ können Flachfolien hergestellt werden. In jedem Fall wird das Datenträger-Recyclat einem Extruder zugeführt, beispielsweise als Granulat, in dem Extruder zu einer Polymerschmelze verflüssigt und durch eine Düse extrudiert.

Bei Mehrschichtfolien mit verschiedenen Recyclatanteilen werden mehrere Extruder benötigt, entsprechend der Menge an verschiedenen Beschickungsmaterialien. Bei einer Folie mit drei Schichten unterschiedlicher Zusammensetzung werden drei Extruder benötigt, ebenso wie bei einer Folie mit fünf Schichten, bei der jeweils zwei Schichten eine identische Zusammensetzung haben. Die in den Extrudern aufgeschmolzenen Datenträger-Recyclate bilden Schmelzeströme, die in einer Mehrschicht-Ringdüse (beim Blasverfahren) zu einer Verbundfolie vereinigt werden, oder (bei coextrudierten Flachfolien) vor der Düse über einen Adapter zusammengeführt und gemeinsam durch eine Breitschlitzdüse extrudiert werden. Der dabei gebildete noch flüssige Prefilm wird dann abgekühlt und verfestigt, beispielsweise durch Anlegen an eine Gießwalze.

Anstatt den oder die Extruder mit "fertigem" Datenträger-Recyclat zu beschicken, kann das Datenträger-Recyclat auch in dem Extruder bzw. in den Extrudern aus Regenerat und thermoplastischem Elastomer hergestellt werden, indem der Extruder bzw. die Extruder mit Regenerat und thermoplastischem Elastomer in den jeweils gewünschten Mengen beschickt werden.

Eine Beschickung mit Regranulat, Additiven und thermoplastischem Elastomer, d. h. eine Compoundierung des Regranulats mit Additiven zum Regenerat und Modifizierung des Regenerats zum Datenträger-Recyclat im selben Extruder ist grundsätzlich ebenfalls möglich, aber weniger bevorzugt. Vielmehr erfolgt die Compoundierung des zurückgewonnenen Kunststoffmaterials mit den üblichen Additiven, wie sie auch bei neu hergestellten Kunststoffen zur Verbesserung der Eigenschaften zugegeben werden, bevorzugt separat vor der Modifizierung, beispielsweise in einem Mischersystem, einem Knetersystem oder einem Compoundierextruder.

Coextrudierte Verbundfolien sind gegenüber Monoschichtfolien bevorzugt. Die Coextrusion erlaubt es, Kunststoffmaterialien miteinander zu verbinden, die nur eingeschränkt miteinander verträglich sind. Dünne Außenschichten (5 -10 µm) können definiert eingestellt werden, sodass die Verbundfolien laminierbar und bedruckbar, sowie chemisch beständig und alterungsbeständig sind. Innenschichten können unabhängig von Eigenschaften wie Laminiereigenschaften und Druckeigenschaften so eingestellt werden, dass sie dem Kartenkörper Eigenschaften wie hohe Flexibilität, Biegebeanspruchbarkeit und Schlagfestigkeit verleihen. Bei opaken Innenschichten kann außerdem die Farbe definiert eingestellt werden. Zwischenschichten zwischen Innenschichten und Außenschichten erhöhten zusätzlich den Freiheitsgrad bei der Zusammenstellung der Folienrezepturen, und damit auch den Freiheitsgrad bei der Erzielung gewünschter Folieneigenschaften.

Bei der Herstellung der erfindungsgemäßen Datenträger-Recyclingfolien werden die für die verwendeten Materialien üblichen Prozessparameter verwendet, die einem Fachmann bekannt sind.

Die fertigen Datenträger-Recyclingfolien können, auf die gewünschte Größe zugeschnitten, als Datenträger-Kartenkörper verwendet werden. Sie können auch mit weiteren Folien laminiert werden und somit lediglich eine Teilschicht eines Kartenkörpers darstellen.

Zur Herstellung von Datenträgern werden die Kartenkörper in einem Fachmann bekannter Weise mit Aufdrucken, Sicherheitselementen und/ oder elektronischen Modulen ausgestattet.

Die vorliegende Erfindung wird nachfolgend anhand von Figuren noch weiter veranschaulicht. Es wird darauf hingewiesen, dass bei der vorliegenden Erfindung Offenbarung im Zusammenhang mit einem Gegenstand der Erfindung, wie Datenträger-Recyclat, Verfahren zur Erzeugung eines Datenträger-Recyclats, Datenträger-Recyclingfolie, Verfahren zur Erzeugung einer Datenträger-Recyclingfolie sowie Datenträger, in analoger Weise für die jeweils übrigen Gegenstände dieser Erfindung gilt. Ferner wird darauf hingewiesen, dass die Figuren nicht maßstabsgetreu und nicht proportionsgetreu sind. Sie sollen die Erfindung lediglich näher erläutern und sind in keiner Weise als beschränkend zu verstehen. Gleiche Bezugsziffern bezeichnen jeweils gleiche Elemente.

Es zeigen:
- Fig. 1: einen Schnitt durch eine erfindungsgemäße Datenträger-Recyclingfolie mit fünf Schichten,
- Fig. 2: einen Schnitt durch eine erfindungsgemäße DatenträgerRecyclingfolie mit drei Schichten,
- Fig. 3: einen Schnitt durch einen erfindungsgemäßen Datenträger mit Monofolienaufbau,
- Fig. 4: einen Schnitt durch einen erfindungsgemäßen Datenträger mit Mehrschichtaufbau, und
- Fig. 5: eine schematische Darstellung eines erfindungsgemäßen Herstellungsverfahrens einer Datenträger-Recyclingfolie, wie sie in Fig. 1 dargestellt ist.

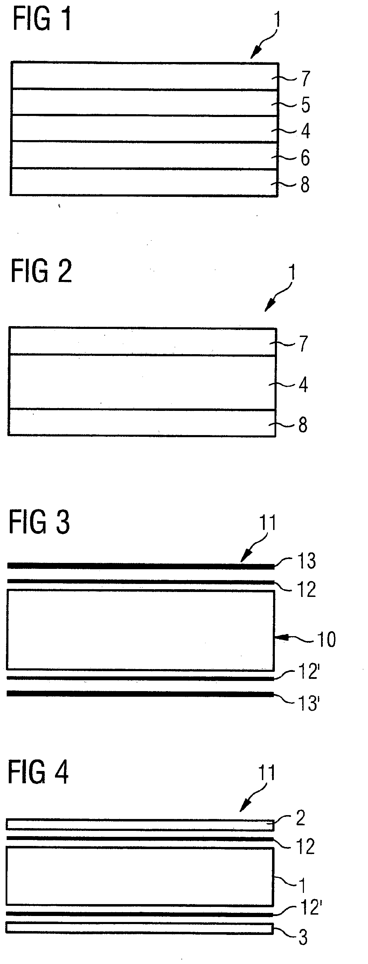

Fig. 1 zeigt eine erste Ausführungsform einer erfindungsgemäßen Datenträger-Recyclingfolie 1 im Schnitt. Die dargestellte Datenträger-Recyclingfolie ist eine Verbundfolie mit einer Innenschicht 4, einer ersten Außenschicht 7, einer zweiten Außenschicht 8, einer ersten Zwischenschicht 5 und einer zweiten Zwischenschicht 6. In Fig. 1 weisen alle Schichten dieselbe Dicke auf, die Schichten können aber auch verschiedene Dicken besitzen, wobei im Falle verschiedener Dicken die Innenschicht bevorzugt die dickste Schicht ist.

Die Datenträger-Recyclingfolie 1 kann eine Innenschicht 4 und Zwischenschichten 5, 6, die recyceltes Polyethylenterephthalat enthalten, aufweisen. In der dargestellten Ausführungsform enthält die Innenschicht 4 95 Gew.-% PET-Recylat und 5 Gew.-% Copolyesterelastomer, die Zwischenschichten 5, 6 enthalten jeweils 90 Gew.-% PET-Recyclat und 10 Gew.-% desselben Copolyesterelastomers, und die Außenschichten 7, 8 bestehen jeweils aus dem reinen Copolyesterelastomer. Alternativ können natürlich auch andere Recyclate als PET verwendet werden.

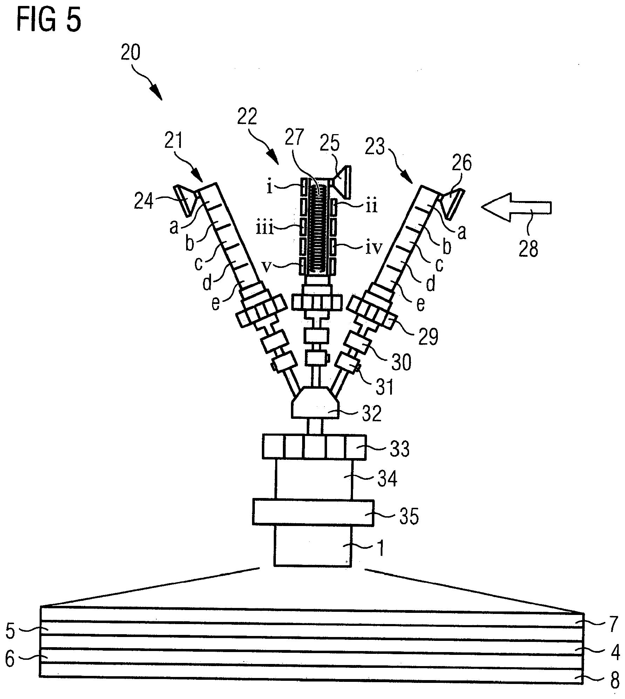

Eine derartige Verbundfolie kann hergestellt werden, wie es in Fig. 5 schematisch veranschaulicht ist.

Fig. 5 zeigt eine Vorrichtung 20 mit Extrudern 21, 22, 23, einem Adapter 32, einer Breitschlitzdüse 33 und einer Gießwalze 35. Jeder der Extruder 21, 22, 23 hat fünf Zonen a, b, c, d und e, in denen mittels Heizeinrichtungen i, ii, iii, iv und v (dargestellt bei Extruder 22) verschiedene Temperaturen eingestellt werden können. Durch Aufgabetrichter 24, 25, 26 wird den Extrudern 21, 22, 23 ihr jeweiliges Beschickungsmaterial zugeführt. Das Beschickungsmaterial ist bei Extruder 23 schematisch als Pfeil 28 dargestellt. Die Bezugsziffer 29 bezeichnet ein optionales Mischteil, die Bezugsziffern 30, 31 bezeichnen Flansche.

Im Falle der in Fig. 1 dargestellten Verbundfolie 1 wird dem Extruder 22 ein Beschickungsmaterial aus 95 Gew.-% PET-Recyclat und 5 Gew.-% thermoplastischem Elastomer zur Herstellung der Innenschicht 4 zugeführt, während dem Extruder 21 ein Beschickungsmaterial aus 90 Gew.-% PET-Recyclat und 10 Gew.-% thermoplastischem Elastomer zur Herstellung der Zwischenschichten 5, 6 zugeführt wird, und dem Extruder 23 ein Beschickungsmaterial aus reinem thermoplastischen Elastomer zur Herstellung der Außenschichten 7, 8 zugeführt wird. In den Extrudern wird das Beschickungsmaterial aufgeschmolzen und mittels Schnecken (für Extruder 22 schematisch als Schnecke 27 dargestellt) durch die Extruderzonen a, b, c, d und e transportiert. Geeignete Temperaturen für die einzelnen Zonen sind in Tabelle 1 dargestellt.

**Tabelle 1 (PET)**

| Extruder | 21 | 22 | 23 |
|---|---|---|---|
| Zone | | | |
| a | 85°C | 85°C | 85°C |
| b | 265°C | 265°C | 265°C |
| c | 270°C | 270°C | 270°C |
| d | 270°C | 270°C | 270°C |
| e | 270°C | 270°C | 270°C |
| Adapter | 280°C | 280°C | 280°C |
| Düse | 275°C | 275°C | 275°C |

Die Prozessparameter variieren in Abhängigkeit von dem Beschickungsmaterial. Geeignete Temperaturen für ein Polyolefin-Recyclat (beispielsweise ein Polyethylen-Recyclat) sind in Tabelle 2 angegeben, und geeignete Temperaturen für ein Polyamid-Recyclat sind in Tabelle 3 angegeben. Es versteht sich, dass die Werte jeweils beispielhafte Richtwerte darstellen. Ausgehend von diesen Richtwerten sind die für ein spezielles Beschickungsmaterial optimalen Temperaturen für einen Fachmann durch wenige Versuche ermittelbar.

**Tabelle 2 (PE)**

| Extruder | 21 | 22 | 23 |
|---|---|---|---|
| Zone | | | |
| a | 60°C | 60°C | 60°C |
| b | 225°C | 225°C | 225°C |
| c | 230°C | 230°C | 230°C |
| d | 235°C | 235°C | 235°C |
| e | 235°C | 235°C | 235°C |
| Adapter | 235°C | 235°C | 235°C |
| Düse | 235°C | 235°C | 235°C |

**Tabelle 3 (PA6.6)**

| Extruder | 21 | 22 | 23 |
|---|---|---|---|
| Zone | | | |
| a | 85°C | 85°C | 85°C |
| b | 255°C | 255°C | 255°C |
| c | 260°C | 260°C | 260°C |
| d | 260°C | 265°C | 260°C |
| e | 260°C | 265°C | 260°C |
| Adapter | 265°C | 265°C | 265°C |
| Düse | 260°C | 260°C | 260°C |

Die Schmelzeströme der Extruder 21, 22, 23 werden in dem Adapter 32 zusammengeführt und gemeinsam durch die Breitschlitzdüse 33, beispielsweise eine Kleiderbügeldüse, extrudiert, wobei der Prefilm 34 gebildet wird. Der noch flüssige Prefilm wird durch Anlegen an die Gießwalze 35 abgekühlt und verfestigt, wobei die Datenträger-Recyclingfolie 1 erhalten wird, die unter der Vorrichtung 20 im Schnitt vergrößert dargestellt ist.

Anstatt für die Innenschicht 4 und die Zwischenschichten 5, 6 jeweils ein Polyester-Recyclat zu verwenden, könnten auch verschiedene Recyclate verwendet werden, beispielsweise ein Polyethylenterephthalat-Recyclat für die Innenschicht 4 und ein Polyethylen-Recyclat für die Zwischenschichten 5, 6. In analoger Weise können zur Modifizierung der Recyclate auch verschiedene thermoplastische Elastomere verwendet werden, bei einem Polyester-Recyclat beispielsweise ein Copolyesterelastomer in der Innenschicht 4, und ein Urethanelastomer in den Zwischenschichten 5, 6.

Ebenso können die verschiedenen Schichten einer als Verbundfolie ausgebildeten Datenträger-Recyclingfolie verschiedene Additive in unterschiedlichen Mengen enthalten. Beispielsweise könnten die Außenschichten 7, 8 Antioxidantien, Lichtschutzmittel und Flammschutzmittel enthalten, während die Innenschicht 4 Zusätze zur Verbesserung der Schlagzähigkeit sowie Pigmente zur Einfärbung und/oder Opazifizierung enthalten könnte.

Die innerste Schicht muss nicht zwingend die Schicht mit dem höchsten Recyclatanteil sein. Beispielsweise könnte bei der Ausführungsform gemäß Fig. 1 die Innenschicht 4 der Datenträger-Recyclingfolie 1 90 Gew.-% PET-Recyclat und 10 Gew.-% Copolyesterelastomer enthalten, während die Zwischenschichten 5, 6 jeweils 95 Gew.-% PET-Recyclat und 5 Gew.-% Copolyesterelastomer enthalten könnten, und die Außenschichten 7, 8 aus thermoplastischem origin (d.h. ohne Zumischung von gebrauchtem Material) Copolyester bestehen können.

Fig. 2 zeigt eine andere Ausführungsform einer erfindungsgemäßen Datenträger-Recyclingfolie 1. Diese Ausführungsform ist ebenfalls eine Verbundfolie, aber eine Verbundfolie mit lediglich drei Schichten, einer Innenschicht 4, einer ersten Außenschicht 7 an einer Seite der Innenschicht 4, und einer Au-ßenschicht 8 an der anderen Seite der Innenschicht 4. Bei der in Fig. 2 dargestellten Ausführungsform weisen die Außenschichten 7, 8 dieselbe Dicke auf, sind aber dünner ausgebildet als die Innenschicht 4.

Eine derartige Folie kann mittels einer Vorrichtung coextrudiert werden, die der Vorrichtung 20 von Fig. 5 ähnlich ist, wobei jedoch nur zwei Extruder benötigt werden, sofern die beiden Außenschichten 7, 8 dieselbe Zusammensetzung aufweisen. Bei Außenschichten 7, 8 mit unterschiedlicher Zusammensetzung werden wiederum drei Extruder benötigt.

Eine Datenträger-Recyclingfolie 1 mit dem in Fig. 2 dargestellten Schichtaufbau könnte beispielsweise eine Innenschicht 4 aus 95 Gew.-% Recyclat (Polyester, Polyolefin oder Polyamid), und Außenschichten 7, 8 aus jeweils 80 Gew.-% Recyclat und 20 Gew.-% thermoplastischen Elastomer besitzen. Alternativ könnten die Außenschichten 7, 8 beispielsweise aus einem siegelfähigen Thermoplasten bestehen. Bei einer Innenschicht auf der Basis von PET-Recyclat könnten die Außenschichten aus PETG (mit Glykol modifiziertes PET) bestehen.

Werden für eine bestimmte Oberfläche einer Datenträger-Recyclingfolie sehr spezifische Eigenschaften gewünscht, beispielsweise Siegelfähigkeit oder eine besonders gute Bedruckbarkeit, kann es erforderlich sein, den RecyclatAnteil in der betreffenden Schicht gering zu halten oder die betreffende Schicht ohne Recyclat auszubilden. In einem solchen Fall ist es bevorzugt, die Recyclat-freie Schicht möglichst dünn auszubilden, beispielsweise mit einer Dicke von 5-10µm.

Gemäß weiteren Ausführungsformen der Erfindung (nicht dargestellt) können die Datenträger-Recyclingfolien auch Verbundfolien mit einer geraden Anzahl an Schichten sein, beispielsweise mit 2, 4 oder 6 Schichten. Beispielsweise könnte eine Datenträger-Recyclingfolie mit zwei Schichten eine Schicht aus 95 Gew.-% Recyclat und 5 Gew.-% thermoplastischem Elastomer, die 80 % der Dicke der Datenträger-Recyclingfolie ausmacht, und eine Schicht aus thermoplastischem Elastomer, die 20 % der Dicke der Datenträger-Recyclingfolie ausmacht, besitzen. Eine derartige Datenträger-Recyclingfolie ist herstellbar mit Hilfe von zwei Extrudern, deren Schmelzeströme in einem geeigneten Adapter zusammengeführt werden.

Fig. 3 zeigt einen erfindungsgemäßen Datenträger 11 mit Monofolienaufbau, wie eine SIM-Karte. Der Datenträger 11 besitzt einen Kartenkörper 10, der von einer einschichtigen Datenträger-Recyclingfolie gebildet wird. In einer beispielhaften Ausführungsform hat die einschichtige Datenträger-Recyclingfolie eine Zusammensetzung mit 95 Gew.-% Recyclat und 5 Gew.-% thermoplastischem Elastomer. Bevorzugt weist diese Recyclingfolie ein Opazifizierungsmittel auf. Beide Oberflächen des Kartenkörpers 10 bzw. der Datenträger-Recyclingfolie weisen Designdruckschichten 12 bzw. 12' auf, die wiederum jeweils eine Ablackierung 13,13' aufweisen.

Fig. 4 zeigt eine alternative Ausführungsform eines erfindungsgemäßen Datenträgers 11, beispielsweise einer Kreditkarte, mit Mehrschichtaufbau. Der Datenträger 11 der in Fig. 4 dargestellten Ausführungsform hat eine Kernschicht aus einer Datenträger-Recyclingfolie 1, die dem Kartenkörper 10 des in Fig. 3 dargestellten Datenträgers 11 ähnlich ist. An beiden Oberflächen der Datenträger-Recyclingfolie 1 befinden sich Designdruckschichten 12 bzw. 12', die wiederum von Datenträger-Recyclingfolien 2, 3 bedeckt sind. Die Datenträger-Recyclingfolien 2, 3 weisen einen geringeren Anteil an Recyclat auf als die Datenträger-Recyclingfolie 1, beispielsweise 70 Gew.-% Recyclat, und sind transparent.

Die erfindungsgemäße Recyclingfolie und die aus der erfindungsgemäßen Recyclingfolie hergestellten Datenträger sind umweltfreundlich und kostengünstig herstellbar. Sie weisen keinerlei Nachteile gegenüber Folien bzw. Datenträgern auf, die aus Kunststoffmaterialien ohne Recyclinganteil hergestellt sind.

## Patentansprüche

1. Verfahren zur Erzeugung eines thermoplastischen Kunststoffmaterials auf der Basis eines Polyolefins, eines Polyesters oder eines Polyamids aus gemischten Kunststoffabfällen, wobei das Kunststoffmaterial zur Herstellung einer Kunststofffolie für einen Datenträger geeignet ist, aufweisend
(a) Bereitstellen eines Polyolefinmaterials, eines Polyestermaterials oder eines Polyamidmaterials, das aus gemischten Kunststoffabfällen möglichst sortenrein abgetrennt wurde,
(b) Compoundieren des Polyolefinmaterials, des Polyestermaterials oder des Polyamidmaterials mit Additiven zur Verbesserung der chemischen und/oder mechanischen und/oder optischen Eigenschaften, um ein Polyolefin-Regenerat, ein Polyester-Regenerat oder ein Polyamid-Regenerat zu erhalten, das zur Herstellung einer Kunststofffolie geeignet ist, und
(c) Modifizieren
des Polyolefinmaterials mit einem thermoplastischen Olefinelastomer und/ oder einem thermoplastischen Kautschukvulkanisat, oder
des Polyestermaterials mit einem thermoplastischen Copolyesterelastomer und/ oder einem thermoplastischen Urethanelastomer, oder
des Polyamidmaterials mit einem thermoplastischen Polyamidelastomer und/ oder einem thermoplastischen Copolyesterelastomer und/ oder einem thermoplastischen Urethanelastomer,
um ein Datenträger-Recyclat auf der Basis eines Polyolefins, eines Polyesters oder eines Polyamids zu erhalten, wobei das Datenträger-Recyclat zur Herstellung einer Kunststofffolie für einen Datenträger geeignet ist.

2. Datenträger-Recyclat auf der Basis eines thermoplastischen Polyolefinmaterials, eines thermoplastischen Polyestermaterials oder eines thermoplastischen Polyamidmaterials, das aus gemischten Kunststoffabfällen möglichst sortenrein abgetrennt wurde, wobei das Datenträger-Recyclat Additive zur Verbesserung der chemischen und/ oder mechanischen und/ oder optischen Eigenschaften sowie mindestens ein Modifizierungsmittel enthält, das es zur Herstellung einer Kunststofffolie für einen Datenträger geeignet macht, wobei das Modifizierungsmittel
bei einem Polyolefinmaterial ein thermoplastisches Olefinelastomer und/ oder ein thermoplastisches Kautschukvulkanisat ist,
bei einem Polyestermaterial ein thermoplastisches Copolyesterelastomer und/ oder ein thermoplastisches Urethanelastomer ist, und
bei einem Polyamidmaterial ein thermoplastisches Polyamidelastomer und/oder ein thermoplastisches Copolyesterelastomer und/oder ein thermoplastisches Urethanelastomer ist.

3. Datenträger-Recyclat nach Anspruch 2 oder Verfahren nach Anspruch 1, wobei
das thermoplastische Olefinelastomer und/oder das thermoplastische Kautschukvulkanisat ein Blockcopolymer mit einem Polyolefin-basierten Polymer als Hartsegment und einem Ethylen-Propylen-Dien-Monomer als Weichsegment ist,
das thermoplastische Copolyesterelastomer ein Blockcopolymer mit einem Butylenterephthalat-Block als Hartsegment und einem Butylenglykolether-Block als Weichsegment ist,
das thermoplastische Urethanelastomer ein Blockcopolymer mit einem Polyurethan-Block als Hartsegment und einem Polyester-Block als Weichsegment ist, und
das thermoplastische Polyamidelastomer ein Blockcopolymer mit einem Polyamid-Block als Hartsegment und einem Polyether-Block als Weichsegment ist.

4. Datenträger-Recyclat nach Anspruch 2 oder 3, oder Verfahren nach Anspruch 1 oder 3, wobei das Datenträger-Recyclat
bei einem Polyolefinmaterial 2,5 - 20 Gew.-%, bevorzugt 5 - 10 Gew.-% thermoplastisches Olefinelastomer und/oder thermoplastisches Kautschukvulkanisat enthält,
bei einem Polyamidmaterial 2,5 - 20 Gew.-%, bevorzugt 5 - 10 Gew.-% thermoplastisches Polyamidelastomer und/ oder Copolyesterelastomer und/ oder Urethanelastomer enthält, und
bei einem Polyestermaterial 2,5 -15 Gew.-%, bevorzugt 5 - 7 Gew.-% thermoplastisches Copolyesterelastomer und/oder thermoplastisches Urethanelastomer enthält.

5. Kunststofffolie, die zur Herstellung eines Datenträgers geeignet ist und mindestens eine Schicht aufweist, die ein thermoplastisches Kunststoffmaterial enthält, das aus gemischten Kunststoffabfällen recycelt wurde, wobei die mindestens eine Schicht ein Datenträger-Recyclat nach einem der Ansprüche 2 bis 4 aufweist.

6. Kunststofffolie nach Anspruch 5, wobei die Folie eine mehrschichtige Verbundfolie mit einer Innenschicht und mindestens zwei weiteren Schichten ist, und wobei mindestens die Innenschicht ein Datenträger-Recyclat nach einem der Ansprüche 2 bis 6 enthält.

7. Kunststofffolie nach Anspruch 6, wobei in jeder Schicht, die ein Datenträger-Recyclat enthält, der Anteil an Recyclat umso höher ist, je weiter innen in dem Schichtverbund sich die Schicht befindet.

8. Kunststofffolie nach Anspruch 6 oder 7, wobei die Innenschicht 90 - 98 Gew.-% Recyclat enthält und die Außenschichten unabhängig voneinander 0 - 70 Gew.-% Recyclat enthalten.

9. Kunststofffolie nach Anspruch 5, die aus einer einzigen Schicht mit einem Anteil an Recyclat von 50 - 95 Gew.-% besteht.

10. Verfahren zur Herstellung einer Kunststofffolie, die zur Herstellung eines Datenträgers geeignet ist und mindestens eine Schicht aufweist, die ein thermoplastisches Kunststoffmaterial enthält, das aus gemischten Kunststoffabfällen recycelt wurde,
folgende Schritte aufweisend:
Beschicken mindestens eines Extruders mit
einem Datenträger-Recyclat nach einem der Ansprüche 2 bis 4, oder
einem ein Datenträger-Recyclat nach einem der Ansprüche 2 bis 4 bildenden Material, das ein Polyolefin-Regenerat oder ein Polyester-Regenerat oder ein Polyamid-Regenerat, das durch Durchführen der Schritte (a) und (b) gemäß Anspruch 1 erhalten wurde, und ein Modifizierungsmittel aufweist, wobei das Modifizierungsmittel
bei einem Polyolefinmaterial ein thermoplastisches Olefinelastomer und/oder ein thermoplastisches Kautschukvulkanisat ist,
bei einem Polyestermaterial ein thermoplastisches Copolyesterelastomer und/ oder ein thermoplastisches Urethanelastomer ist, und
bei einem Polyamidmaterial ein thermoplastisches Polyamidelastomer und/oder ein thermoplastisches Copolyesterelastomer und/ oder ein thermoplastisches Urethanelastomer ist, und
Extrudieren des Datenträger-Recyclats, um eine Datenträger-Recyclingfolie zu erhalten.

11. Verfahren nach Anspruch 10, wobei eine mehrschichtige Verbundfolie mit einer Innenschicht und mindestens zwei weiteren Schichten erzeugt wird, bei der mindestens die Innenschicht ein Datenträger-Recyclat nach einem der Ansprüche 2 bis 4 enthält, folgende Schritte aufweisend:
Beschicken mindestens des die Innenschicht erzeugenden Extruders mit einem Datenträger-Recyclat nach einem der Ansprüche 2 bis 4 oder einem ein Datenträger-Recyclat nach einem der Ansprüche 2 bis 4 bildenden Material,
Beschicken eines oder mehrerer weiterer Extruder mit einem Datenträger-Recyclat nach einem der Ansprüche 2 bis 4 oder mit einem ein Datenträger-Recyclat nach einem der Ansprüche 2 bis 4 bildenden Material oder mit einem Kunststoffmaterial, das kein recyceltes Kunststoffmaterial enthält,
Coextrudieren der Innenschicht und der mindestens zwei weiteren Schichten unter Erzeugung einer Verbundfolie.

12. Verfahren nach Anspruch 10 oder 11, wobei eine Verbundfolie mit mehreren Schichten, die ein Datenträger-Recyclat nach einem der Ansprüche 2 bis 4 enthalten, erzeugt wird, und wobei in jeder Schicht, die ein Datenträger-Recyclat enthält, der Anteil an Recyclat umso höher ist, je weiter innen in dem Schichtverbund der Verbundfolie sich die Schicht befindet.

13. Datenträger aufweisend einen Kartenkörper, der mindestens eine Datenträger-Recyclingfolie nach einem der Ansprüche 5 bis 9 aufweist.

14. Datenträger nach Anspruch 13, weiterhin aufweisend mindestens ein elektronisches Modul und/oder einen Aufdruck.

15. Datenträger nach Anspruch 13 oder 14, wobei der Datenträger eine SIM-Karte, eine Kreditkarte oder eine Ausweiskarte ist.

## Claims

1. A method of producing a thermoplastic material based on a polyolefin, a polyester or a polyamide from mixed plastic waste, wherein the plastic material is suitable for manufacturing a plastic foil for a data carrier, comprising
(a) providing a polyolefin material, a polyester material or a polyamide material, which was separated as pure in type as possible from mixed plastic waste,
(b) compounding the polyolefin material, the polyester material or the polyamide material with additives for improving the chemical and/or mechanical and/or optical properties in order to obtain a polyolefin regenerate, a polyester regenerate or a polyamide regenerate which is suitable for manufacturing a plastic foil; and
(c) Modifying
the polyolefin material with a thermoplastic olefin elastomer and/or a thermoplastic rubber vulcanizate, or
the polyester material with a thermoplastic copolyester elastomer and/or a thermoplastic urethane elastomer, or
the polyamide material with a thermoplastic polyamide elastomer and/or a thermoplastic copolyester elastomer and/or a thermoplastic urethane elastomer,
in order to obtain a data carrier recyclate based on a polyolefin, on a polyester or on a polyamide, wherein the data carrier recyclate is suitable for manufacturing a plastic foil for a data carrier.

2. A data carrier recyclate based on a thermoplastic polyolefin material, on a thermoplastic polyester material or on a thermoplastic polyamide material, which was separated as pure in type as possible from mixed plastic waste, wherein the data carrier recyclate includes additives for improving the chemical and/or mechanical and/or optical properties and at least one modifying agent which makes it suitable for manufacturing a plastic foil for a data carrier, wherein the modifying agent
in the case of a polyolefin material, is a thermoplastic olefin elastomer and/or a thermoplastic rubber vulcanizate,
in the case of a polyester material, is a thermoplastic copolyester elastomer and/or a thermoplastic urethane elastomer, and
in the case of a polyamide material, is a thermoplastic polyamide elastomer and/or a thermoplastic copolyester elastomer and/or a thermoplastic urethane elastomer.

3. The data carrier recyclate according to claim 2 or the method according to claim 1, wherein
the thermoplastic olefin elastomer and/or the thermoplastic rubber vulcanizate is a block copolymer with a polyolefin-based polymer as hard segment and an ethylene-propylene-diene monomer as soft segment,
the thermoplastic copolyester elastomer is a block copolymer with a butylene terephthalate block as hard segment and a butylene glycol ether block as soft segment,
the thermoplastic urethane elastomer is a block copolymer with a polyurethane block as hard segment and a polyester block as soft segment, and
the thermoplastic polyamide elastomer is a block copolymer with a polyamide block as hard segment and a polyether block as soft segment.

4. The data carrier recyclate according to claim 2 or 3 or the method according to claim 1 or 3, wherein the data carrier recyclate includes
in the case of a polyolefin material, 2.5-20 wt%, preferably 5-10 wt%, thermoplastic olefin elastomer and/or thermoplastic rubber vulcanizate,
in the case of a polyamide material, 2.5-20 wt%, preferably 5-10 wt%, thermoplastic polyamide elastomer and/or copolyester elastomer and/or urethane elastomer, and
in the case of a polyester material, 2.5-15 wt%, preferably 5-7 wt%, of thermoplastic copolyester elastomer and/or thermoplastic urethane elastomer.

5. A plastic foil which is suitable for manufacturing a data carrier and comprises at least one layer which includes a thermoplastic material which was recycled from mixed plastic waste, wherein the at least one layer comprises a data carrier recyclate according to any of claims 2 to 4.

6. The plastic foil according to claim 5, wherein the foil is a multilayer composite foil having an inner layer and at least two further layers, and wherein at least the inner layer includes a data carrier recyclate according to any of claims 2 to 6.

7. The plastic foil according to claim 6, wherein in each layer which includes a data carrier recyclate the portion of recyclate is the higher the further inward in the layer composite the layer is located.

8. The plastic foil according to claim 6 or 7, wherein the inner layer includes 90-98 wt.% recyclate and the outer layers, independently of each other, include 0-70 wt.% recyclate.

9. The plastic foil according claim 5, which consists of one single layer with a portion of recyclate of 50-95 wt%.

10. A method of manufacturing a plastic foil which is suitable for manufacturing a data carrier and comprises at least one layer which includes a thermoplastic material which was recycled from mixed plastic waste,
comprising the following steps:
feeding at least one extruder with
a data carrier recyclate according to any of claims 2 to 4, or
a material forming a data carrier recyclate according to any of claims 2 to 4, which comprises a polyolefin regenerate or a polyester regenerate or a polyamide regenerate, which was obtained by carrying out the steps (a) and (b) according to claim 1, and a modifying agent, wherein the modifying agent
in the case of a polyolefin material, is a thermoplastic olefin elastomer and/or a thermoplastic rubber vulcanizate,
in the case of a polyester material, is a thermoplastic copolyester elastomer and/or a thermoplastic urethane elastomer, and
in the case of a polyamide material, is a thermoplastic polyamide elastomer and/or a thermoplastic copolyester elastomer and/or a thermoplastic urethane elastomer, and
extruding the data carrier recyclate in order to obtain a data carrier recycling foil.

11. The method according to claim 10, wherein a multilayer composite foil having an inner layer and at least two further layers is produced, in which at least the inner layer includes a data carrier recyclate according to any of claims 2 to 4, comprising the following steps:
feeding at least the extruder producing the inner layer with a data carrier recyclate according to any of claims 2 to 4 or a material forming a data carrier recyclate according to any of claims 2 to 4,
feeding one or several further extruders with a data carrier recyclate according to any of claims 2 to 4 or with a material forming a data carrier recyclate according to any of claims 2 to 4 or with a plastic material that does not include recycled plastic material,
coextruding the inner layer and the at least two further layers and thereby producing a composite foil.

12. The method according to claim 10 or 11, wherein a composite foil having several layers which include a data carrier recyclate according to any of claims 2 to 4 is produced, and wherein in each layer which includes a data carrier recyclate the portion of recyclate is the higher the further inward in the layer composite of the composite foil the layer is located.

13. A data carrier comprising a card body which comprises at least one data carrier recycling foil according to any of claims 5 to 9.

14. The data carrier according to claim 13, further comprising at least one electronic module and/or an imprint.

15. The data carrier according to claim 13 or 14, wherein the data carrier is a SIM card, a credit card or an ID card.

## Revendications

1. Procédé de production d'un matériau plastique thermoplastique (8) sur la base d'une polyoléfine, d'un polyester ou d'un polyamide à partir de déchets plastiques mélangés, cependant que le matériau plastique est adapté à la fabrication d'une feuille en matière plastique pour un support de données, comportant
(a) mise à disposition d'un matériau polyoléfine, d'un matériau polyester ou d'un matériau polyamide qui a été séparé le plus purement possible à partir de déchets plastiques mélangés,
(b) compoundage du matériau polyoléfine, du matériau polyester ou du matériau polyamide avec des additifs pour l'amélioration des propriétés chimiques et/ou mécaniques et/ou optiques afin d'obtenir une polyoléfine régénérée, un polyester régénéré ou un polyamide régénéré adapté à la fabrication d'une feuille en matière plastique, et
(c) modification
du matériau polyoléfine avec un élastomère oléfine thermoplastique et/ou avec un vulcanisat de caoutchouc thermoplastique, ou
du matériau polyester avec un élastomère copolyester thermoplastique et/ou avec un élastomère d'uréthanne thermoplastique, ou
du matériau polyamide avec un élastomère polyamide thermoplastique et/ou avec un élastomère copolyester thermoplastique et/ou avec un élastomère d'uréthanne thermoplastique,
afin d'obtenir un recyclat pour support de données sur la base d'une polyoléfine, d'un polyester ou d'un polyamide, le recyclat pour support de données étant adapté à la fabrication d'une feuille en matière plastique pour un support de données.

2. Recyclat pour support de données sur la base d'un matériau polyoléfine thermoplastique, d'un matériau polyester thermoplastique ou d'un matériau polyamide thermoplastique qui a été séparé le plus purement possible à partir de déchets plastiques mélangés, cependant que le recyclat pour support de données contient des additifs pour l'amélioration des propriétés chimiques et/ou mécaniques et/ou optiques, ainsi qu'au moins un agent de modification qui le rend adapté à la fabrication d'une feuille en matière plastique pour un support de données, cependant que l'agent de modification
dans le cas d'un matériau polyoléfine, est un élastomère oléfine thermoplastique et/ou un vulcanisat de caoutchouc thermoplastique,
dans le cas d'un matériau polyester, est un élastomère copolyester thermoplastique et/ou un élastomère d'uréthanne thermoplastique,
dans le cas d'un matériau polyamide, est un élastomère polyamide thermoplastique et/ou un élastomère copolyester thermoplastique et/ou un élastomère d'uréthanne thermoplastique.

3. Recyclat pour support de données selon la revendication 2 ou procédé selon la revendication 1, cependant que
l'élastomère oléfine thermoplastique et/ou le vulcanisat de caoutchouc thermoplastique est un copolymère en bloc ayant comme segment dur un polymère basé sur polyoléfine, et ayant comme segment mou un monomère éthylène-propylène-diène,
l'élastomère copolyester thermoplastique est un copolymère en bloc ayant comme segment dur un bloc téréphtalate de butylène, et ayant comme segment mou un bloc d'éther de butylène-glycol,
l'élastomère d'uréthanne thermoplastique est un copolymère en bloc ayant comme segment dur un bloc de polyuréthane, et ayant comme segment mou un bloc de polyester, et
l'élastomère polyamide thermoplastique est un copolymère en bloc ayant comme segment dur un bloc de polyamide, et ayant comme segment mou un bloc de polyéther.

4. Recyclat pour support de données selon la revendication 2 ou 3, ou procédé selon la revendication 1 ou 3, cependant que le recyclat pour support de données
dans le cas d'un matériau polyoléfine, contient entre 2,5 et 20 pourcent par poids, de préférence entre 5 et 10 pourcent par poids, d'élastomère oléfine thermoplastique et/ou de vulcanisat de caoutchouc thermoplastique,
dans le cas d'un matériau polyamide, contient entre 2,5 et 20 pourcent par poids, de préférence entre 5 et 10 pourcent par poids, d'élastomère polyamide et/ou élastomère copolyester et/ou élastomère d'uréthanne thermoplastique, et
dans le cas d'un matériau polyester, contient entre 2,5 et 15 pourcent par poids, de préférence entre 5 et 7 pourcent par poids, d'élastomère copolyester thermoplastique polyamide et/ou d'élastomère d'uréthanne thermoplastique.

5. Feuille en matière plastique qui est adaptée à la fabrication d'un support de données et comporte au moins une couche qui contient un matériau plastique thermoplastique qui a été recyclé à partir de déchets plastiques mélangés, cependant que la au moins une couche comporte un recyclat pour support de données selon une des revendications de 2 à 4.

6. Feuille en matière plastique selon la revendication 5, cependant que la feuille est une feuille composite multicouche ayant une couche intérieure et au moins deux autres couches, et cependant qu'au moins la couche intérieure contient un recyclat pour support de données selon une des revendications de 2 à 6.

7. Feuille en matière plastique selon la revendication 6, cependant que, dans chaque couche contenant un recyclat pour support de données, la proportion de recyclat est d'autant plus élevée que la couche se trouve davantage à l'intérieur du composite de couches.

8. Feuille en matière plastique selon la revendication 6 ou 7, cependant que la couche intérieure contient entre 90 et 98 pourcent par poids de recyclat, et les couches extérieures contiennent indépendamment les unes des autres entre 0 et 70 pourcent par poids de recyclat.

9. Feuille en matière plastique selon la revendication 5, laquelle consiste en une seule couche ayant une proportion de recyclat comprise entre 50 et 95 pourcent par poids.

10. Procédé de fabrication d'une feuille en matière plastique adaptée à la fabrication d'un support de données et comportant au moins une couche qui contient un matériau plastique thermoplastique qui a été recyclé à partir de déchets plastiques mélangés,
comportant les étapes suivantes :
chargement d'au moins un extruder avec
un recyclat pour support de données selon une des revendications de 2 à 4, ou
un matériau constituant un recyclat pour support de données selon une des revendications de 2 à 4, lequel comporte une polyoléfine régénérée ou un polyester régénéré ou un polyamide régénéré obtenu par exécution des étapes (a) et (b) selon la revendication 1, et comporte un agent de modification, cependant que l'agent de modification
dans le cas d'un matériau polyoléfine, est un élastomère oléfine thermoplastique et/ou un vulcanisat de caoutchouc thermoplastique,
dans le cas d'un matériau polyester, est un élastomère copolyester thermoplastique et/ou un élastomère d'uréthanne thermoplastique,
dans le cas d'un matériau polyamide, est un élastomère polyamide thermoplastique et/ou un élastomère copolyester thermoplastique et/ou un élastomère d'uréthanne thermoplastique, et
extrusion du recyclat pour support de données afin d'obtenir une feuille recyclée pour support de données.

11. Procédé selon la revendication 10, cependant qu'une feuille composite multicouche ayant une couche intérieure et au moins deux autres couches est produite, dans laquelle au moins la couche intérieure contient un recyclat pour support de données selon une des revendications de 2 à 4, comportant les étapes suivantes :
chargement, d'au moins l'extrudeuse produisant la couche intérieure, avec un recyclat pour support de données selon une des revendications de 2 à 4, ou avec un matériau constituant un recyclat pour support de données selon une des revendications de 2 à 4,
chargement d'une ou de plusieurs autres extrudeuses avec un recyclat pour support de données selon une des revendications de 2 à 4, ou avec un matériau constituant un recyclat pour support de données selon une des revendications de 2 à 4, ou avec un matériau plastique ne contenant pas de matériau plastique recyclé,
coextrusion de la couche intérieure et des au moins deux autres couches lors de la production d'une feuille composite.

12. Procédé selon la revendication 10 ou 11, cependant qu'une feuille composite à plusieurs couches qui contiennent un recyclat pour support de données selon une des revendications de 2 à 4 est générée, et cependant que, dans chaque couche qui contient un recyclat pour support de données, la proportion de recyclat est d'autant plus élevée que la couche se trouve davantage à l'intérieur du composite de couches.

13. Support de données comportant un corps de carte qui comporte au moins une feuille recyclée pour support de données selon une des revendications de 5 à 9.

14. Support de données selon la revendication 13, comportant en outre au moins un module électronique et/ou une impression.

15. Support de données selon la revendication 13 ou 14, cependant que le support de données est une carte SIM, une carte de crédit ou une carte d'identification.
